(19) Europäisches Patentamt
European Patent Office
Office européen des brevets

(11) **EP 2 665 930 B1**

(12) **EUROPÄISCHE PATENTSCHRIFT**

(45) Veröffentlichungstag und Bekanntmachung des Hinweises auf die Patenterteilung:
**05.11.2014   Patentblatt 2014/45**

(21) Anmeldenummer: **12756455.7**

(22) Anmeldetag: **05.09.2012**

(51) Int Cl.:
**F03D 11/00** *(2006.01)*

(86) Internationale Anmeldenummer:
**PCT/EP2012/067348**

(87) Internationale Veröffentlichungsnummer:
**WO 2013/034607 (14.03.2013 Gazette 2013/11)**

(54) **VERFAHREN ZUM BESTIMMEN DER NEIGUNG EINES TURMES**

METHOD FOR DETERMINING THE INCLINATION OF A TOWER

PROCÉDÉ DE DÉTERMINATION DE L'INCLINAISON D'UNE TOUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **06.09.2011   DE 102011053317**

(43) Veröffentlichungstag der Anmeldung:
**27.11.2013   Patentblatt 2013/48**

(73) Patentinhaber: **GL Garrad Hassan Deutschland GmbH**
**25709 Kaiser-Wilhelm-Koog (DE)**

(72) Erfinder: **Heining, Nils**
**25421 Pinneberg (DE)**

(74) Vertreter: **Knoop, Philipp**
**Vonnemann Kloiber & Kollegen**
**An der Alster 84**
**20099 Hamburg (DE)**

(56) Entgegenhaltungen:
**EP-A1- 2 133 563       WO-A1-2009/001310**
**US-A1- 2011 140 420       US-B1- 6 640 609**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Bestimmen der Neigung eines Turms, insbesondere einer Windenergieanlage, im Verhältnis zum Schwerefeld mittels Auswertung des Ausgangsignals eines zur Aufnahme einer statischen Beschleunigung in Richtung einer Sensor-Messachse ausgebildeten Beschleunigungssensors.

Speziell im Bereich der Bauten von Windenergieanlagen im Offshore-Bereich stellt sich das Problem der Verlagerung der Gründungen. Durch die ausgeprägte Schwingfähigkeit der langgestreckten Windenergieanlagen wird die Problematik der Verlagerung bei diesen noch verschärft. Um derartige unerwünschte Verlagerungen, die bei Windenergieanlagen verschiedenste unerwünschte Auswirkungen haben könnten, wie zum Beispiel ungleichmäßige Belastung von Lagern, festzustellen, besteht daher der Bedarf an gattungsgemäßen Verfahren zum Bestimmen der Neigung.

Die Messung ist schwierig, da die Windenergieanlage häufig bei der Durchführung der Messung in Schwingbewegungen stehen kann, welche Beschleunigungen verbunden ist, die das Messsignal eines Beschleunigungssensors mit einer Amplitude beeinflussen, welche jene des durch die Lagerung hervorgerufenen Messsignals deutlich übersteigt.

In der EP 2 133 563 A1 ist ein solches Verfahren offenbart, wobei in Folge einer mehrere Schritte umfassenden Signalauswertung basierend auf Messwerten eines Beschleunigungssensors in der Gondel der Windenergieanlage die Beschleunigung, Geschwindigkeit, Stellung sowie Neigung der Gondel bestimmt werden.

Eine andere in der Praxis eingesetzte Methode zur Bestimmung der Neigung von Windenergieanlagen basiert darauf, dass Libellen einer Wasserwaage über eine Videokamera ausgelesen werden. Diese Methode ist messtechnisch in jeder Hinsicht unbefriedigend. Eine weitere Schwierigkeit besteht darin, dass die zu messende Neigung so gering sein kann, dass Schiefstellungen in Bezug auf die Turmhochachse des für die Messung eingesetzten Beschleunigungssensors das Messergebnis bis zur Unkenntlichkeit verfälschen könnten.

Die D1 offenbart ein spektrales Verfahren zur Kalibrierung von Beschleunigungssensoren, bei dem der Beschleunigungssensor auf einem Drehtischmechanismus befestigt wird, wobei der Drehtisch gegenüber der lokalen Gravitationsachse geneigt ist.

Es ist daher Aufgabe der vorliegenden Erfindung, ein Verfahren zum Bestimmen der Neigung eines Turmes der eingangs genannten Art anzugeben, welches einfach anwendbar ist und an beliebigen Windenergieanlagen zum Beispiel durch Messpersonal mit einer mobilen Messeinrichtung beispielsweise im Rahmen von regelmäßigen Untersuchungen durchgeführt werden kann.

Erfindungsgemäß wird diese Aufgabe mit einem Verfahren zum Bestimmen der Neigung eines Turms der eingangs genannten Art gelöst, bei welchem der Beschleunigungssensor an einem um die Längsachse des Turms in einem Azimutwinkelbereich von mindestens 180°, vorzugsweise von 360°, drehbaren Bauteil, vorzugsweise einem Hauptrahmen, derart befestigt ist, dass die Sensor-Messachse im wesentlichen parallel zur Drehebene des Bauteils orientiert ist, wobei das Ausgangssignal nacheinander bei verschiedenen Azimutwinkeln gemessen und aufgezeichnet wird, in dem das Bauteil zwischen Messungen gedreht wird, wobei die Neigung durch Auswertung der so erhaltenen Messreihe bestimmt wird. Erfindungsgemäß kann beispielsweise ein Beschleunigungssensor eingesetzt werden, welcher aus anderen Gründen, in der Regel zu Zwecken der Schwingungsmessung der Windenergieanlage, bereits vorhanden ist. Die Aufzeichnung des Ausgangssignals bei verschiedenen Azimutwinkeln der Gondel hat gegenüber bekannten Verfahren zur Neigungsmessung unter Einsatz von Beschleunigungssensoren den Vorteil, dass eine Vielzahl von mit dem gesuchten Messwert im funktionalen Zusammenhang stehenden Datenpunkten erhalten werden kann, welche eine gute statistische Mittelung der Messwerte ermöglichen. Dies ist aufgrund der eingangs erwähnten Schwingungen, unter dem das Messobjekt in der Regel stehen wird, vom großen Vorteil. Im Rahmen der Erfindung geeignete Beschleunigungssensoren kommen alle bekannten Beschleunigungssensoren in Frage, welche auch konstante Beschleunigungen messen können, um die Erdbeschleunigung und deren Richtung erfassen zu können. Beispielsweise können im einfachsten Fall Geräte mit einer verschiebbaren Prüfmasse verwendet werden. Aber auch Systeme basierend auf biegsamen Quarzstäben oder magnetisch stabilisierten Massen kommen in Frage schließlich sind mikroelektromechanische Systeme (MEMS) für die Neigung gemessen. In jedem Falle kommt es darauf an, dass die Geräte die Beschleunigung entlang nur einer Messachse ausgeben. Insbesondere kann der Beschleunigungssensor im Rahmen der Erfindung um die Turmachse drehbaren Maschinenhauses angebracht sein. Die Messreihe wird idealer Weise für verschiedene Azimutwerte in einem Bereich von 360° entsprechen einer vollständigen Umdrehung des Bauteils durchgeführt. Dies hat insbesondere den Vorteil, dass bei Erreichen einer 180° Stellung bezüglich des Azimutwinkels das Messsignal verdoppelt werden kann. Wenn eine volle 360° Umdrehung durchgeführt werden kann, erhält man aus Symmetriegründen eine redundante Messreihe zu der Messung bei dem Winkelbereich 0° bis 180°, welche zur weiteren statistischen Verbesserung der Messwerte führt.

Das Bauteil kann in gleichmäßigen Azimutwinkelschritten gedreht werden, um die Auswertung der Messreihe zwecks Bestimmung der Neigung zu erleichtern. Beispielsweise können Messungen in 10° Schritten bezüglich des Azimutwinkels durchgeführt werden, um eine Messreihe umfassend 36 Werte zu erhalten.

Die statistische Eliminierung von durch Schwingungen des Turms hervorgerufenen Messfehlern wird begünstigt, wenn zu jedem gegebenen Azimutwinkel nacheinander eine Reihe von Ausgangssignalen gemessen und aufgezeichnet wird und anschließend aus der Reihe von Ausgangssignalen ein gemittelter Wert bestimmt und aufgezeichnet und der Messreihe zugrundegelegt wird. Beispielsweise kann bei jeder gegebenen Azimutwinkelposition, zu welcher eine Messung vorgenommen werden soll, über drei Minuten mit einer hohen Abtastrate gemessen werden. Bei der Mittelung heben sich dann zeitabhängige Anteile der Beschleunigungsmesswerte zum großen Teil heraus.

In Ausbildung der Erfindung kann bei dem Verfahren die Auswertung die Bestimmung eines Maximalwertes und eines Minimalwertes der Messreihe sowie der Bestimmung der Differenz zwischen dem Maximum und dem Minimum umfassen. Dabei wird ein maximaler Wert des Beschleunigungssignals zu erwarten sein, wenn ein Beschleunigungssensor mit dessen Messachse so ausgerichtet ist, dass eine maximale Richtungskomponente vertikal ausgerichtet ist. Der zugehörige Minimalwert wird dem entsprechenden Messwert der Reihe für einen Azimutwinkel um 180° verschoben entsprechen.

Insbesondere kann erfindungsgemäß die Neigung anhand folgender Formel berechnet werden:

$$\alpha = \arcsin\left[\frac{1}{2}\frac{a_{max}-a_{min}}{g}\right],$$

wobei $\alpha$ der Neigungswinkel, g die Erdbeschleunigung, $\alpha_{max}$ den Maximalwert der Messreihe und $\alpha_{min}$ den Minimalwert der Messreihe bezeichnen. Geometrische Überlegungen, die weiter unten im Zusammenhang mit den Figuren im Einzelnen erläutert sind, zeigen, dass der gesuchte Neigungswinkel des Turmes gegenüber der Lotrichtung mit dieser Formel zu bestimmen ist, wenn Werte an einer maximalen und minimalen Beschleunigung bei einer Messreihe, welche für Messpunkte, die zu einer vollständigen Drehung des drehbaren Bauteils um einen Azimutwinkelbereich von 0° bis 360° gehören, ausgewertet werden. Dabei entspricht der Maximalwert einer Azimutstellung des drehbaren Bauteils, bei welcher die vertikal Komponente der Sensor-Messachse parallel zur Vertikalen nach unten ausgerichtet ist. Demgegenüber entspricht der Minimalwert einem Azimutwinkelwert des Bauteils, bei welchem die Vertikalkomponente der Sensor-Messachse maximal vertikal nach oben, also der Schwerkraft entgegen gerichtet, ausgerichtet ist.

Das Verfahren wird wesentlich verbessert, wenn die Neigung anhand folgender Formel berechnet wird:

$$\alpha = \arcsin\left[\frac{1}{2}\frac{a_{max}-a_{min}}{g\cdot\cos(\beta)}\right],$$

wobei $\beta$ die Schiefstellung der Sensor-Messachse gegenüber der Drehebene bezeichnet. Eine Berücksichtigung einer etwaigen Schiefstellung der Sensor-Messachse gegenüber der Drehebene des Bauteils wird, wie geometrische Überlegungen, die im Zusammenhang mit der Figurenbeschreibung erläutert sind, durch diesen funktionalen Zusammenhang berücksichtigt. Wenn somit erfindungsgemäß der Schiefstellungswinkel $\beta$ bekannt ist, lässt sich dessen Einfluss bei der Auswertung der Messreihe exakt berechnen, um den Neigungswinkel $\alpha$ zu ermitteln.

In bevorzugter Ausgestaltung des erfindungsgemäßen Verfahrens wird eine Schiefstellung der Sensor-Messachse gegenüber der Drehebene aus der Messreihe bestimmt, vorzugsweise in dem man Offset eines variablen Anteils der Messreihe bestimmt wird, und wird bei der Bestimmung der Neigung berücksichtigt. Geometrische Betrachtungen, die weiter unten im Zusammenhang mit den Figuren näher erläutert sind, zeigen, dass eine Schiefstellung der Sensor-Messachse gegenüber der Drehebene des Bauteils dazu führt, dass ein mit dem Azimutwinkel variierender Teil bei einer nicht verschwindenden Schiefstellung $\beta$ der Sensor-Messachse gegenüber der Drehebene gegenüber dem Nullpunkt in Form eines Offset verschoben wird. Die Bestimmung des Offsets aus der Messreihe ist mit üblicher Signalverarbeitung unter Verwendung üblicher, für sich genommen wohlbekannter Methoden zur Kurvendiskussion ohne weiteres möglich.

Insbesondere kann erfindungsgemäß das Offset bestimmt werden, indem die Summe aus dem Maximalwert und dem Minimalwert gebildet und durch zwei geteilt wird. Für den Fall einer bei der Drehung aus geometrischen Gründen zu erwartenden sinusoidalen Variation des Messsignals in Abhängigkeit des Azimutwinkels ist der mit dem Azimutwinkel variable Anteil bei verschwindendem Schiefstellungswinkel $\beta$ symmetrisch um die horizontale Achse, so dass die Summe aus Maximalwert und Minimalwert null ergibt.

In bevorzugter Ausgestaltung des Verfahrens nach der Erfindung für die Schiefstellung aus dem Offset anhand folgender Formel berechnet:

$$\beta = \arcsin\left[\frac{a_0}{g}\right],$$

wobei $\beta$ die Schiefstellung, g die Erdbeschleunigung und $\alpha_0$ das Offset des variablen Anteils der Messreihe bezeichnen. Der Offset kann aus geometrischen Überlegungen zu dem erfindungsgemäßen Messverfahren, die mit Bezug auf die Figuren weiter unten im Einzelnen näher beschrieben sind, der Offset-Wert der gemessenen Beschleunigung mit dem Wert identifiziert werden, den man erhält, wenn der Azimutwinkel so eingestellt ist, dass die Sensor-Messachse so ausgerichtet ist, dass für verschwindende Schiefstellung keine Neigung in vertikaler Richtung der Sensor-Messachse vorläge.

Zur Erhöhung des Vertrauensbereichs des erfindungsgemäßen Messverfahrens kann ein zweiter Beschleunigungssensor derart an dem Bauteil befestigt sein, dass die Sensor-Messachse im wesentlichen parallel zur Drehebene des Bauteils und rechtwinklig zur Sensor-Messachse des ersten Beschleunigungssensor orientiert ist, wobei das Ausgangssignal des zweiten Beschleunigungssensor neben dem Ausgangssignal des ersten Beschleunigungssensors gemessen und aufgezeichnet wird, wobei die Neigung zusätzlich durch Ausgestaltung der so erhaltenen zweiten Messreihe bestimmt wird. Aus Geometrieüberlegungen zu dem Messverfahren ergibt sich, dass die Messreihe, welche mit dem zweiten Beschleunigungssensor der ersten Messreihe, verschoben um 90° hinsichtlich des Azimutwinkels, entspricht. Die Auswertung der Messreihe des zweiten Beschleunigungssensors, welcher erfindungsgemäß zu dem ersten Beschleunigungssensor gekreuzt ist, liefert somit eine Redundanz, welche in Vorteil zur statistischen Mittelung der erhaltenen Neigungswerte herangezogen werden kann. Zudem sind viele Windenergieanlagen bereits mit gekreuzten Beschleunigungssensoren oder integrierten Zweiachsbeschleunigungssensoren versehen. Das erfindungsgemäße Verfahren kann mit Vorteil daher bei derartigen Windenergieanlagen durchgeführt werden, indem bei der Drehung des Maschinenhauses die Ausgangssignale dieser beiden Beschleunigungssensoren auszuwerten sind. Hinsichtlich der Überlegungen zu einer Schiefstellung des zweiten Beschleunigungssensors gegenüber der Drehebene gelten die analogen Überlegungen und erfindungsgemäßen Verfahren zu deren Ermittlung aus der Messreihe, wie die oben ausgeführten Überlegungen zum ersten Beschleunigungssensor.

Eine weitere Verbesserung des erfindungsgemäßen Verfahrens erhält man, wenn ein weiterer Beschleunigungssensor an dem Bauteil derart befestigt ist, dass die Sensor-Messachse im wesentlichen senkrecht zur Drehebene des Bauteils orientiert ist, wobei das Ausgangssignal des weiteren Beschleunigungssensors neben dem Ausgangssignal des ersten Beschleunigungssensors gemessen und aufgezeichnet wird, wobei die Neigung zusätzlich Auswertung der so erhaltenen weiteren Messreihe bestimmt wird. Erfindungsgemäß ist dieser weitere Beschleunigungssensor senkrecht zu dem ersten Beschleunigungssensor und auch senkrecht zu einem etwaig eingesetzten zweiten Beschleunigungssensor ausgerichtet. Das Ausgangssignal dieses weiteren Beschleunigungssensors wird aus gemischten Überlegungen theoretisch invariant gegenüber Variation des Azimutwinkels sein und vermag daher als Referenz für die Messreihen der anderen Beschleunigungssensoren zu dienen. Insbesondere kann der senkrechte Beschleunigungssensor eingesetzt werden, um die Genauigkeit zu erhöhen, wenn eine große Querempfindlichkeit der Sensoren vorhanden ist, um den Einfluss der Querempfindlichkeit zu verringern. Mit Querempfindlichkeit ist zu verstehen, dass ein Beschleunigungssensor auch von Beschleunigungen, welche im rechten Winkel zur Sensor-Messachse auftreten, empfindlich ist.

Schließlich kann in vorteilhafter Ausgestaltung des erfindungsgemäßen Verfahrens zu dem Ausgangssignal der Azimutwinkel bestimmt und die Messreihe, die zweite Messreihe und/oder die weitere Messreihe durch Aufzeichnung des jedem Ausgangssignals zugeordneten Azimutwinkels zu einem aus geordneten Paaren bestehenden Funktionsgraphen ergänzt werden, um eine Richtung der Neigung zu ermitteln. Wohingegen es somit für das Grundprinzip des erfindungsgemäßen Verfahrens nicht erforderlich ist, Absolutwerte des Azimutwinkels aufzuzeichnen, da lediglich Maximal- und Minimalwerte sowie Offsets für die Auswertung herangezogen zu einem aus geordneten Paaren bestehenden Funktionsgraphen ergänzt werden, um eine Richtung der Neigung zu ermitteln. Wohingegen es somit für das Grundprinzip des erfindungsgemäßen Verfahrens nicht erforderlich ist, Absolutwerte des Azimutwinkels aufzuzeichnen, da lediglich Maximal- und Minimalwerte sowie Offsets für die Auswertung herangezogen werden, kann eine Bestimmung des Azimutwinkels absolut zur Charakterisierung der Ausrichtung der Sensor-Messachse verwendet werden. Dies ermöglicht unter anderem die Feststellung einer Neigungsrichtung.

Schließlich wird dieser Erfindung zugrundeliegende Aufgabe gelöst durch eine Vorrichtung zur Durchführung des Verfahrens nach der Erfindung gemäß einem der Ansprüche 1 bis 12, welche die Merkmale des Patentanspruchs 13 aufweist. Die Vorrichtung umfasst eine Auswerteeinheit sowie Mittel zum Auslesen von Ausgangssignalen der Beschleunigungssensoren, welche entweder bereits Bestandteil der auszumessenden Windenergieanlage sind oder welche als Bestandteil der erfindungsgemäßen Vorrichtung an die auszumessende Windenergieanlage anzuschließen sind. Die Auswerteeinheit ist zur Durchführung der in den Verfahrensansprüchen erläuterten Auswertungen ausgestaltet.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:

Figur 3:    Darstellung wie Figuren 1 und 2, jedoch mit einer Azimutwinkelstellung von 90° des Maschinenhauses;

Figur 4:    Darstellung wie Figuren 1, 2, 3, jedoch mit Azimutwinkel von 270°;

Figur 5:    beispielhafte Darstellung des Graphen einer Messreihe für einen Beschleunigungssensor ohne Schiefstellung relativ zur Hochachse des Azimutlagers.

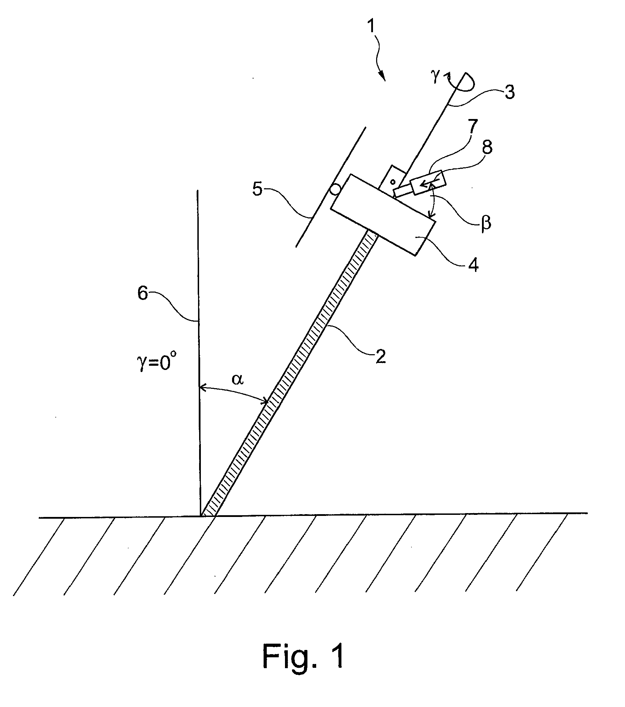

Figur 1 zeigt in einer Seitenansicht eine Windenergieanlage 1 mit einem Turm 2, einem am oberen Ende des Turms 2 um die Längsachse 3 des Turms 2 unterschiedliche Azimutwinkel γ rotierbaren Maschinenhaus 4. Zur Orientierung ist an dem Maschinenhaus 4 schematisch ein Rotor 5 angedeutet. Der Turm 2 ist mit seiner Längsachse 3 gegenüber der Vertikalen 6 und damit gegenüber der Richtung, in welche die Schwerkraft wirkt, um einen Winkel α geneigt ausgerichtet. An dem Maschinenhaus 4 ist ein Beschleunigungssensor 7 angebracht, dessen Messachse 8 durch einen Pfeil angedeutet ist. Die Messachse 8 ist gegenüber der durch die Oberkante des Maschinenhauses 4 angedeuteten Drehebene des Maschinenhauses 4 um einen Schieflagewinkel β geneigt angeordnet.

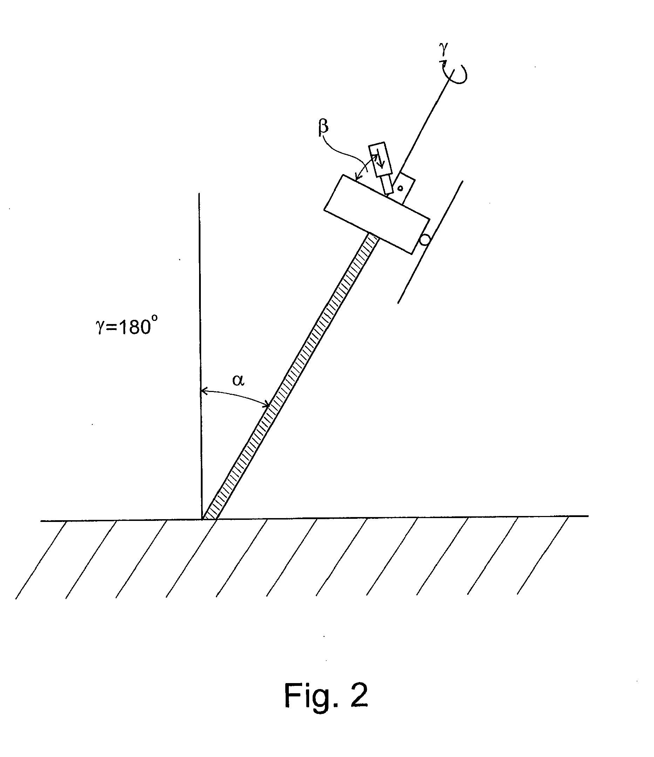

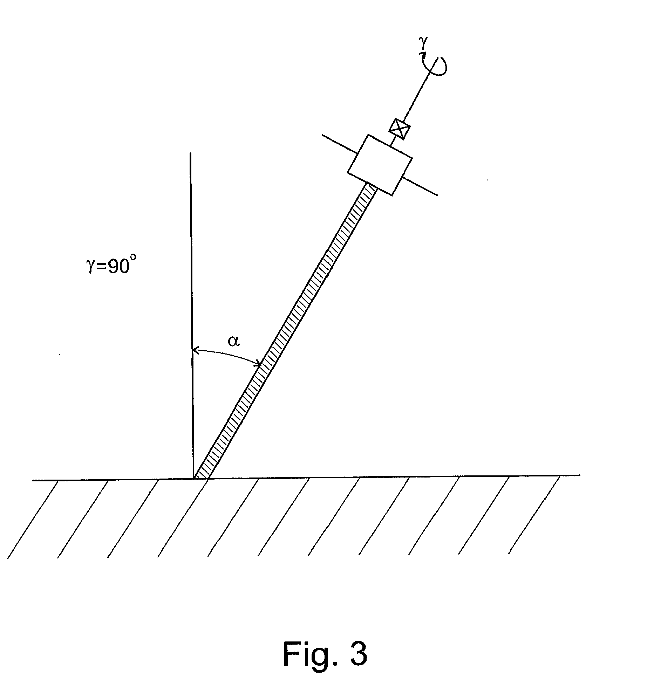

Figur 2 zeigt denselben Darstellungskonventionen wie Figur 1 die Windenergieanlage. Abweichend zu der in Figur 1 gezeigten Situation ist jedoch das Maschinenhaus 4 um die Längsachse 3 des Turms 2 gegenüber der in Figur 1 gezeigten Stellung um 180° gedreht. Dies ist dadurch zu erkennen, dass der Rotor 5 in der Seitenansicht rechts am Maschinenhaus 4 gezeigt ist. Es ist zu erkennen, dass der Beschleunigungssensor 7 und dessen BeschleunigungsSensor-Messachse 8 gegenüber der Vertikalen 6 einen anderen Winkel einnimmt als bei der in Figur 1 gezeigten Stellung. Bei diesem Ausführungsbeispiel wird davon ausgegangen, wie bei Windenergieanlagen üblich, das Maschinenhaus 4 um die Längsachse 3 des Turms 2 drehbar ist, so dass die Drehebene senkrecht auf der Längsachse 3 des Turms 2 steht. Das erfindungsgemäße Verfahren kann mit entsprechenden Anpassungen an die Signalauswertung jedoch auch für Fälle angewendet, in welcher die Drehachse des Maschinenhauses 4 nicht mit der Längsachse 3 des Turms 2 zusammenfällt. In Figur 3 ist schließlich mit denselben Darstellungskonventionen wie in Figur 1 und 2 die Windenergieanlage 1 gemäß den Figuren 1 und 2 gezeigt. Dabei ist abweichend zu den Figuren 1 und 2 das Maschinenhaus 4 gegenüber Figur 1 um 90° um die Längsachse 3 des Turms 2 rotiert. Dies ist dadurch ersichtlich, dass der Rotor 5 schematisch unterhalb der Zeichenebene dargestellt ist. Die Orientierung der BeschleunigungsSensor-Messachse 8 des Beschleunigungssensors 7 ist in dieser Stellung rechtwinklig in die Zeichenebene hinein, wie durch ein Kreuz angedeutet. Die BeschleunigungsSensor-Messachse 8 hat bei der in Figur 3 gezeigten Azimutwinkelstellung von β = 90° keine Komponente parallel zur Zeichenebene.

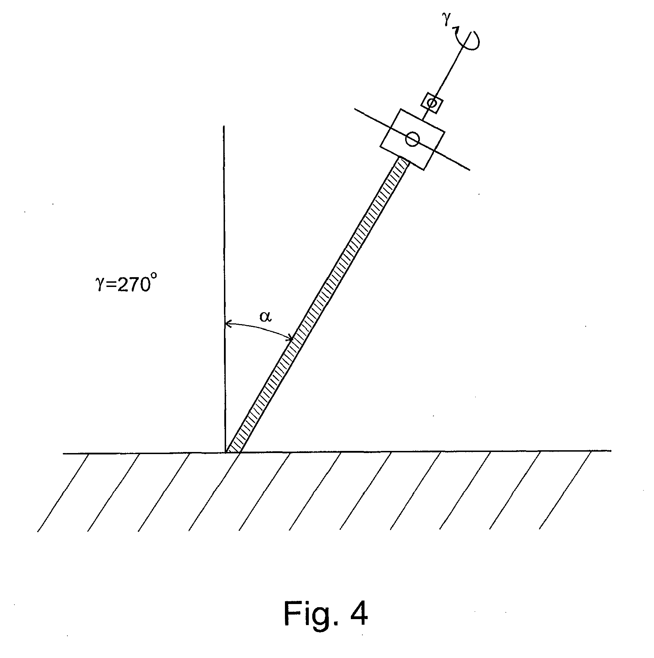

In Figur 4 ist schließlich die Windenergieanlage 1 gemäß den Figuren 1, 2, 3 gezeigt in einer Azimutwinkelstellung von 270°. Diese Azimutwinkelstellung ist schematisch verdeutlicht dadurch, dass der Rotor 5 nunmehr in Bezug auf die Zeichenebene über dem Maschinenhaus 4 steht. Entsprechend zeigt die BeschleunigungsSensor-Messachse 8 des Beschleunigungssensors 7 in dieser Stellung aus der Zeichenebene heraus, wie durch einen Punkt angedeutet.

Zur Durchführung des erfindungsgemäßen Verfahrens wird das Maschinenhaus 4 und damit der daran befestigte Beschleunigungssensor 7 in gleichmäßigen Inkrementen ausgehend von der Azimutwinkelstellung γ = 0° gemäß Figur 1 über die Azimutwinkelstellungen von 90° gemäß Figur 3, von 180° gemäß Figur 2 sowie 270° gemäß Figur 4 zurück in die Ausgangsstellung gemäß Figur 1 gedreht. Zu jeder Stellung des Azimutwinkels γ wird das Ausgangssignal des Beschleunigungssensors 7 aufgenommen. Um zeitlich variable Komponenten des Ausgangssignals möglichst gut zu eliminieren, wird die Messung für ein Zeitintervall von beispielsweise 3 Minuten mit einer verhältnismäßig hohen Abtastrate durchgeführt. Anschließend wird ein gemittelter Wert aus der Zeitreihe bestimmt und als mit dem jeweiligen Azimutwinkel assoziierte Messwert einer Messreihe aufgefangen.

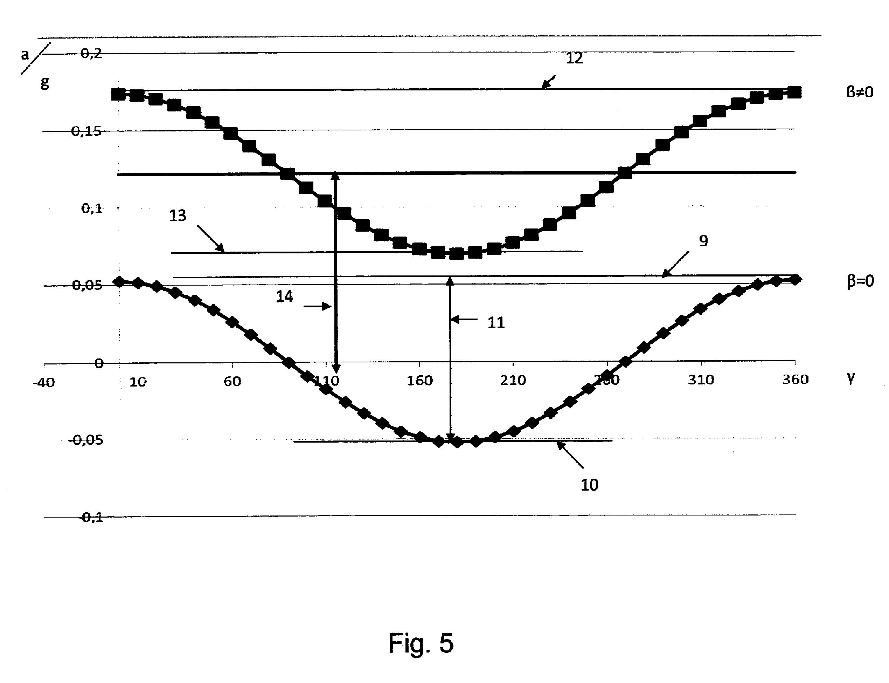

Figur 5 zeigt eine graphische Darstellung in idealisierten Weise zweier mit dem beschriebenen erfindungsgemäßen Verfahren gewonnenen Messreihen. Die vertikale Achse gibt dabei die ermittelten - zeitlich gemittelten - Beschleunigungswerte a in Einheiten von der Erdbeschleunigung g an. Die horizontale Achse gibt hingegen die Winkelwerte des Azimutwinkels γ, also den Drehwinkel des Maschinenhauses 4 um die Längsachse 3 des Turms 2 der Windenergieanlage 1, an. Dabei ist es für das Verfahren grundsätzlich nicht unbedingt erforderlich, dass auf der horizontalen Achse Winkelwerte für γ aufgetragen werden. Vielmehr genügt es, wenn sichergestellt ist, dass die Messreihen in gleichmäßigen Inkrementen des Azimutwinkels γ aufgetragen sind.

Die untere, mit Diamanten gekennzeichnete Messreihe der Figur 5 zeigt eine Kurve von idealisierten Messreihen, welche man erhalten würde, wenn der Winkel β der Schieflage der BeschleunigungsSensor-Messachse 8 gegenüber der Drehebene des Maschinenhauses 4 null beträgt, so dass keine Schieflage vorliegt. In diesem Fall erkennt man, dass sich ein um die Nulllinie symmetrischer Verlauf des Funktionsgraphen ergibt. Zur Auswertung der Messreihe kann nun erfindungsgemäß eine Bestimmung eines Maximalwertes 9 sowie eines Minimalwertes 10 vorgenommen werden. Anschließend kann die Differenz 11 zwischen dem Maximalwert 9 und dem Minimalwert 10 bestimmt werden. Aus dieser Differenz lässt sich anhand der Formel

$$\alpha = \arcsin\left[\frac{1}{2}\frac{a_{max} - a_{min}}{g}\right]$$ der gesuchte Neigungswinkel α bestimmen.

Wenn man nun die obere, durch Quadrate gekennzeichnete Messreihe in Figur 5, die eine idealisierte Messreihe für einen Beschleunigungssensor, dessen Sensorachse in einem nichtverschwindenden Winkel $\beta$ zur Drehebene orientiert ist, ergibt sich folgendes. Bei der Auswertung wird wiederum ein Maximalwert 12 sowie ein Minimalwert 13 ermittelt. Zusätzlich wird jedoch ein Offset 14 der Messreihe gegenüber der Nulllinie ermittelt. Der Offset gibt die Verschiebung des mit $\gamma$ variablen Anteils des Messsignals gegenüber der Nulllinie an. Zur Auswertung der oberen Messreihe gemäß Figur 5 wird nun anhand der Formel

$$\alpha = \arcsin\left[\frac{1}{2}\frac{a_{max} - a_{min}}{g \cdot \cos(\beta)}\right]$$ der gesuchte Neigungswinkel $\alpha$ bestimmt. Dabei wird zuvor anhand des Offset-Wertes 14 anhand folgender Formel

$$\beta = \arcsin\left[\frac{a_0}{g}\right]$$ der Winkel $\beta$ bestimmt, der in die zuvor genannte Formel einfließt.

Hintergrund ist, dass geometrische Überlegungen basierend auf den prinzipiellen geometrischen Gegebenheiten gemäß den Figuren 1 bis 4 zeigen, dass die gemessenen Beschleunigungswerte in folgendem funktionalen Zusammenhang mit dem Neigungswinkel $\alpha$ und der Schieflage des Messsensors angebenden Winkel $\beta$ aufweisen $a_{senaor} = g \cdot \sin(\beta + \alpha \cos\gamma \cdot \alpha)$. Sowohl anhand der Formel als auch anhand der Figuren 1 bis 4 ist ersichtlich, dass die Maximalwerte 9 bzw. 12 für $\gamma = 0$ bzw. $\gamma = 360°$, wie in Figur 1 gezeigt, erhalten werden, bei welcher die Schieflage $\beta$ des Sensors 7 zu einer Überhöhung des gemessenen Beschleunigungswertes führt. Gleichermaßen sind die Minimalwerte 10 bzw. 13 mit der in Figur 2 veranschaulichten Azimutlage von 180° assoziiert. Zum Verständnis ist stets zu beachten, dass der Beschleunigungssensor 7 stets nur die Komponente der Beschleunigung misst, welche in Richtung der BeschleunigungsSensor-Messachse 8 ausgerichtet ist. Bezug nehmend auf die Figuren 3 und 4 lässt sich die Bestimmung und Bedeutung des Offsets 14 veranschaulichen. Bei den Azimutstellungen von 90° bzw. 270° trägt der Neigungswinkel $\alpha$ keine Beschleunigungskomponente in Richtung der BeschleunigungsSensor-Messachse 8 bei. Dementsprechend rührt ein von null verschiedener Beschleunigungssensorwert bei diesen Stellungen des Azimutwinkels ausschließlich von einer Schieflage um den Winkel $\beta$ her.

Dabei beruht die Auswertung der Messreihen, wie mit Bezug auf Figur 5 veranschaulicht, nicht auf einer genauen Kenntnis des Absolutwertes des Azimutwinkels $\gamma$, da ausschließlich Maximalwerte 9, 12 bzw. Minimalwerte 10, 13 ausgewertet werden müssen, unabhängig von deren Lage auf der horizontalen Achse. Der Offset 14 im einfachsten Falle bestimmt werden, indem durch Subtrahieren des Minimalwertes 13 vom Maximalwert 12 und anschließenden Subtrahieren der Hälfte dieser Differenz von dem Maximalwert 12.

Es versteht sich, dass die hier vorgestellte Beschreibung von idealisierten Verhältnissen ausgeht. In der Praxis wird zunächst eine geeignete Signalglättung mit dem Fachmann wohlbekannten Verfahren erforderlich sein.

In Figur 5 nicht dargestellt, jedoch anhand dieser Figur leicht ersichtlich, würde die Hinzufügung eines zweiten Beschleunigungssensors, welcher ebenfalls im wesentlichen in der Drehebene des Maschinenhauses 4, jedoch um 90° zu dem Beschleunigungssensor 7 gedreht, zu entsprechenden Kurven führen, welche jedoch horizontal um 90° verschoben wären. Die Auswertung eines derartigen zweiten Beschleunigungssensors könnte in analoger Weise erfolgen, wobei ein ggf. von der Schieflage des ersten Beschleunigungssensors unterschiedlicher Schieflagewinkel in analoger Weise zu berücksichtigen wäre. Zur Überprüfung von Effekten durch etwaige Querempfindlichkeiten der Beschleunigungssensoren kann ein weiterer Beschleunigungssensor verwendet werden, welcher in Richtung der Längsachse 3 des Maschinenhauses 4 und damit senkrecht zur Drehebene montiert ist.

Somit ist erfindungsgemäß ein Verfahren zur Messung einer Neigung eines Turms, insbesondere einer Windenergieanlage, im Verhältnis zum Schwerefeld mittels Auswertung des Ausgangssignals eines zur Aufnahme einer statischen Beschleunigung in Richtung einer Sensor-Messachse ausgebildeten Beschleunigungssensors angegeben, welches einfach anzuwenden ist, da es auf keine besondere Präzision bei der Anbringung der Beschleunigungssensoren bedarf. Die Drehung des Maschinenhauses 4 um die Längsachse 3 des Turms 2 ist bei allen üblichen Windenergieanlagen 1 vorgesehen, um eine optimale Ausrichtung zum Wind zu ermöglichen. Somit kann das erfindungsgemäße Messverfahren mit Vorteil ohne Modifikationen der Windenergieanlage durchgeführt werden. Da, wie eingangs bereits erwähnt, die meisten Windenergieanalgen ohnehin bereits mit einem Beschleunigungssensor 7, möglicherweise sogar mit mehreren Beschleunigungssensoren, versehen sind, kann in vielen Fällen sogar die Installation eines Beschleunigungssensors zur Durchführung der Messung entfallen. Stattdessen muss lediglich das Signal der Bordeigenen Beschleunigungssensoren abgegriffen werden.

BEZUGSZEICHENLISTE

| 1 | Windenergieanlage |
|---|---|
| 2 | Turm |
| 3 | Längsachse |
| 4 | Maschinenhaus |
| 5 | Rotor |
| 6 | Vertikale |
| 7 | Beschleunigungssensor |

8      Beschleunigungssensor-Messachse
9      Maximalwert, keine Schieflage
10      Minimalwert, keine Schieflage
11      Differenz, keine Schieflage
12      Maximalwert, Schieflage
13      Minimalwert, Schieflage
14      Offset

**Patentansprüche**

1. Verfahren zum Bestimmen der Neigung eines Turmes (2), insbesondere einer Windenergieanlage (1), im Verhältnis zum Schwerefeld mittels Auswertung des Ausgangssignals eines zur Aufnahme einer statischen Beschleunigung in Richtung einer Sensor-Messachse ausgebildeten Beschleunigungssensors (7), **dadurch gekennzeichnet, dass** der Beschleunigungssensor (7) an einem um die Längsachse (3) des Turms (2) in einem Azimutwinkelbereich von mindestens 180°, vorzugsweise von 360°, drehbaren Bauteil (4), vorzugsweise einem Hauptrahmen, derart befestigt ist, dass die Sensor-Messachse (8) im wesentlichen parallel zur Drehebene des Bauteils (4) orientiert ist, wobei das Ausgangssignal nacheinander bei verschiedenen Azimutwinkeln gemessen und aufgezeichnet wird, indem das Bauteil (4) zwischen Messungen gedreht wird, wobei die Neigung durch Auswertung der so erhaltenen Messreihe bestimmt wird.

2. Verfahren nach Anspruch 1, **dadurch gekennzeichnet, dass** das Bauteil (4) in gleichmäßigen Azimutwinkelschritten gedreht wird.

3. Verfahren nach Anspruch 1 oder 2, **dadurch gekennzeichnet, dass** zu jedem gegebenen Azimutwinkel nacheinander eine Reihe von Ausgangssignalen gemessen und aufgezeichnet wird und anschließend aus der Reihe von Ausgangssignalen ein gemittelter Wert bestimmt und aufgezeichnet und der Messreihe zugrundegelegt wird.

4. Verfahren nach einem der vorhergehenden Ansprüche, **dadurch gekennzeichnet, dass** die Auswertung die Bestimmung eines Maximalwertes (9, 12) und eines Minimalwertes (10, 13) der Messreihe sowie der Bestimmung der Differenz (11) zwischen dem Maximalwert (9, 12) und dem Minimalwert (10, 13) umfasst.

5. Verfahren nach einem der vorhergehenden Ansprüche, **dadurch gekennzeichnet, dass** die Neigung anhand folgender Formel berechnet wird:

$$\alpha = \arcsin\left[\frac{1}{2}\frac{a_{max} - a_{min}}{g}\right],$$

wobei $\alpha$ der Neigungswinkel, g die Erdbeschleunigung, $\alpha_{max}$ den Maximalwert (9, 12) der Messreihe und $\alpha_{min}$ den Minimalwert (10, 13) der Messreihe bezeichnen.

6. Verfahren nach einem der vorhergehenden Ansprüche, **dadurch gekennzeichnet, dass** die Neigung anhand folgender Formel berechnet wird:

$$\alpha = \arcsin\left[\frac{1}{2}\frac{a_{max} - a_{min}}{g \cdot \cos(\beta)}\right],$$

wobei $\beta$ die Schiefstellung der Sensor-Messachse (8) gegenüber der Drehebene bezeichnet.

7. Verfahren nach einem der vorhergehenden Ansprüche, **dadurch gekennzeichnet, dass** eine Schiefstellung der Sensor-Messachse (8) gegenüber der Drehebene aus der Messreihe bestimmt, vorzugsweise indem ein Offset (14) eines variablen Anteils der Messreihe bestimmt wird, und bei der Bestimmung der Neigung berücksichtigt wird.

8. Verfahren nach Anspruch 8, **dadurch gekennzeichnet, dass** das Offset (14) bestimmt wird, indem die Summe aus dem Maximalwert (9, 12) und dem Minimalwert (10, 13) gebildet und durch zwei geteilt wird und das Ergebnis von dem Maximalwert (9, 12) subtrahiert wird.

9. Verfahren nach einem der vorhergehenden Ansprüche, **dadurch gekennzeichnet, dass** die Schiefstellung aus dem Offset (14) anhand folgender Formel berechnet wird:

$$\beta = \arcsin\left[\frac{a_0}{g}\right],$$

wobei $\beta$ die Schiefstellung, g die Erdbeschleunigung und $\alpha_0$ das Offset (14) des variablen Anteils der Messreihe bezeichnen.

10. Verfahren nach einem der vorhergehenden Ansprüche, **dadurch gekennzeichnet, dass** ein zweiter Beschleunigungssensor derart an dem Bauteil (4) befestigt ist, dass die Sensor-Messachse im wesentlichen parallel zur Drehebene des Bauteils (4) und rechtwinklig zur Sensor-Messachse des ersten Beschleunigungssensor (7) orientiert ist, wobei das Ausgangssignal des zweiten Beschleunigungssensors neben dem Ausgangssignal des ersten Beschleunigungssensors (7) gemessen und aufgezeichnet wird, wobei die Neigung zusätzlich durch Auswertung der so erhaltenen zweiten Messreihe bestimmt wird.

11. Verfahren nach einem der vorhergehenden Ansprüche, **dadurch gekennzeichnet, dass** ein weiterer Beschleunigungssensor an dem Bauteil (4) derart befestigt ist, dass die Sensor-Messachse im wesentlichen senkrecht zur Drehebene des Bauteils (4) orientiert ist, wobei das Ausgangssignal des weiteren Beschleunigungssensors neben dem Ausgangssignal des ersten Beschleunigungssensors (7) gemessen und aufgezeichnet wird, wobei die Neigung zusätzlich durch Auswertung der so erhaltenen weiteren Messreihe bestimmt wird.

12. Verfahren nach einem der vorhergehenden Ansprüche, **dadurch gekennzeichnet, dass** zu jedem Ausgangssignal der Azimutwinkel bestimmt und die Messreihe, die zweite Messreihe und/oder die weitere Messreihe durch Aufzeichnung des jedem Ausgangssignal zugeordneten Azimutwinkels zu einem aus geordneten Paaren bestehenden Funktionsgraphen ergänzt wird, um eine Richtung der Neigung zu ermitteln.

13. Vorrichtung zur Durchführung des Verfahrens nach einem der Ansprüche 1 bis 12, umfassend eine Auswerteinheit sowie Mittel zum Auslesen von Ausgangssignalen von Beschleunigungssensoren (7), wobei die Auswerteinheit zur Aufzeichnung des Ausgangssignals eines zur Aufnahme einer statischen Beschleunigung in Richtung einer Sensor-Messachse ausgebildeten Beschleunigungssensors (7) und zur Bestimmung der Neigung durch Auswertung der so erhaltenen Messreihe ausgestaltet ist.

14. Vorrichtung nach Anspruch 13, **dadurch gekennzeichnet, dass** die Auswerteinheit zur Durchführung der Auswertungen gemäß einem der Patentansprüche 1 bis 12 ausgestaltet ist.

15. Vorrichtung nach Anspruch 13 oder 14, **dadurch gekennzeichnet, dass** sie einen Beschleunigungssensor (7) umfasst.

## Claims

1. Method for determining the inclination of a tower (2), in particular of a wind turbine (1), in relation to the gravitational field, by evaluating the output signal from an acceleration sensor (7) configured to pick up a static acceleration in the direction of a sensor measurement axis, **characterised in that** the acceleration sensor (7) is attached to a component (4), preferably to a main frame, which can be rotated about the longitudinal axis (3) of the tower (2) in an azimuth angular range of at least 180°, preferably 360°, such that the sensor measurement axis (8) is oriented substantially parallel to the plane of rotation of the component (4), the output signals, in the case of various azimuth angles, being successively measured and recorded by rotating the component (4) between measurements, the inclination being determined by evaluation of the series of measurements obtained thus.

2. Method according to claim 1, **characterised in that** the component (4) is rotated in uniform azimuth angle steps.

3. Method according to claim 1 or 2, **characterised in that** at any given azimuth angle, a series of output signals is successively measured and recorded and an averaged value is then determined and recorded from the series of output signals and is taken as a basis for the series of measurements.

4. Method according to any one of the preceding claims, **characterised in that** the evaluation comprises the determination of a maximum value (9, 12) and of a minimum value (10, 13) of the series of measurements as well as the determination of the difference (11) between the maximum value (9, 12) and the minimum value (10, 13).

5. Method according to any one of the preceding claims, **characterised in that** the inclination is calculated using the following formula:

$$\alpha = \arcsin\left[\frac{1}{2}\frac{a_{max}-a_{min}}{g}\right]$$

wherein $\alpha$ denotes the inclination angle, g denotes the gravitational acceleration, $\alpha_{max}$ denotes the maximum value (9, 12) of the series of measurements and $\alpha_{min}$ denotes the minimum value (10, 13) of the series of measurements.

6. Method according to any one of the preceding claims, **characterised in that** the inclination is calculated using the following formula:

$$\alpha = \arcsin\left[\frac{1}{2}\frac{a_{\max} - a_{\min}}{g \cdot \cos(\beta)}\right]$$

wherein β denotes the tilting of the sensor measurement axis (8) relative to the plane of rotation.

7. Method according to any one of the preceding claims, **characterised in that** a tilting of the sensor measurement axis (8) relative to the plane of rotation is determined from the series of measurements, preferably **in that** an offset (14) of a variable portion of the series of measurements is determined and is considered in the determination of the inclination.

8. Method according to claim 8, **characterised in that** the offset (14) is determined by forming the sum of the maximum value (9, 12) and of the minimum value (10, 13) and dividing the product by two and subtracting the product from the maximum value (9, 12).

9. Method according to any one of the preceding claims, **characterised in that** the tilting is calculated from the offset (14) using the following formula:

$$\beta = \arcsin\left[\frac{a_0}{g}\right]$$

wherein β denotes the tilting, g denotes the gravitational acceleration and $\alpha_0$ denotes the offset (14) of the variable portion of the series of measurements.

10. Method according to any one of the preceding claims, **characterised in that** a second acceleration sensor is attached to the component (4) such that the sensor measurement axis is oriented substantially parallel to the plane of rotation of the component (4) and at a right angle to the sensor measurement axis of the first acceleration sensor (7), the output signal from the second acceleration sensor being measured and recorded in addition to the output signal from the first acceleration sensor (7), the inclination additionally being determined by evaluation of the second series of measurements obtained thus.

11. Method according to any one of the preceding claims, **characterised in that** a further acceleration sensor is attached to the component (4) such that the sensor measurement axis is oriented substantially vertically to the plane of rotation of the component (4), the output signal from the further acceleration sensor being measured and recorded in addition to the output signal from the first acceleration sensor (7), the inclination additionally being determined by evaluation of the further series of measurements obtained thus.

12. Method according to any one of the preceding claims, **characterised in that** the azimuth angle is determined for any output signal and the series of measurements, the second series of measurements and/or the further series of measurements is supplemented by recording the azimuth angle associated with each output signal, to produce a function graph consisting of ordered pairs, to calculate the direction of the inclination.

13. Device for implementing the method according to any one of claims 1 to 12, comprising an evaluation unit and means for reading out output signals from acceleration sensors (7), wherein the evaluation unit is designed to record the output signal from an acceleration sensor (7) configured to pick up a static acceleration in the direction of a sensor measurement axis, and to determine the inclination by evaluating the series of measurements obtained thus.

14. Device according to claim 13, **characterised in that** the evaluation unit is designed to carry out the evaluations according to any one of claims 1 to 12.

15. Device according to claim 13 or 14, **characterised in that** it comprises an acceleration sensor (7).

**Revendications**

1. Procédé de détermination de l'inclinaison d'une tour (2), en particulier d'une installation d'énergie éolienne (1), par rapport au champ de pesanteur, par exploitation du signal de sortie d'un capteur d'accélération (7) destiné à enregistrer une accélération statique en direction d'un axe de mesure du capteur, **caractérisé en ce que** le capteur d'accélération (7) est fixé à une pièce rotative (4) pouvant tourner autour de l'axe longitudinal (3) de la tour (2) dans une plage angulaire azimutale d'au moins 180°, de préférence de 360°, de préférence un cadre principal, de manière à ce que l'axe de mesure du capteur (8) soit orienté sensiblement à la parallèle du plan de rotation de la pièce (4), le signal de sortie étant mesuré et enregistré successivement à différents angles azimutaux en tournant la pièce (4) entre les mesures, l'inclinaison étant déterminée par exploitation de la série de mesures ainsi obtenue.

2. Procédé selon la revendication 1, **caractérisé en ce que** la pièce (4) est tournée par étapes régulières d'angle azimutal.

3. Procédé selon la revendication 1 ou 2, **caractérisé**

**en ce que**, pour chaque angle azimutal donné, une série de signaux de sortie est mesurée et enregistrée successivement puis, à partir de la série de signaux de sortie, une valeur moyenne est déterminée et enregistrée et la série de mesure est prise comme base.

4. Procédé selon une des revendications précédentes, **caractérisé en ce que** l'exploitation recouvre la détermination d'une valeur maximale (9, 12) et d'une valeur minimale (10, 13) de la série de mesures et la définition de la différence (11) entre la valeur maximale (9, 12) et la valeur minimale (10, 13).

5. Procédé selon une des revendications précédentes, **caractérisé en ce que** l'inclinaison est calculée à partir de la formule suivante :

$$\alpha = \arcsin\left[\frac{1}{2}\frac{a_{max} - a_{min}}{g}\right],$$

$\alpha$ désignant l'angle d'inclinaison, $g$ l'accélération terrestre, $a_{max}$ la valeur maximale (9, 12) de la série de mesures et $a_{min}$ la valeur minimale (10, 13) de la série de mesures.

6. Procédé selon une des revendications précédentes, **caractérisé en ce que** l'inclinaison est calculée à partir de la formule suivante :

$$\alpha = \arcsin\left[\frac{1}{2}\frac{a_{max} - a_{min}}{g \cdot \cos(\beta)}\right],$$

$\beta$ désignant la position penchée de l'axe de mesure du capteur (8) par rapport au plan de rotation.

7. Procédé selon une des revendications précédentes, **caractérisé en ce qu'**une position penchée de l'axe de mesure du capteur (8) par rapport au plan de rotation est définie à partir de la série de mesures, en particulier par le fait qu'un décalage (14) d'une part variable de la série de mesures est déterminé et qu'il en est tenu compte lors de la détermination de l'inclinaison.

8. Procédé selon la revendication 8, **caractérisé en ce que** le décalage (14) est déterminé en faisant la somme de la valeur maximale (9, 12) et de la valeur minimale (10, 13) et en la divisant par deux puis en soustrayant le résultat de la valeur maximale (9, 12).

9. Procédé selon une des revendications précédentes, **caractérisé en ce que** la position penchée est calculée à partir du décalage (14) à partir de la formule

suivante :

$$\beta = \arcsin\left[\frac{a_0}{g}\right],$$

$\beta$ désignant la position penchée, $g$ l'accélération terrestre et $a_0$ le décalage (14) de la part variable de la série de mesures.

10. Procédé selon une des revendications précédentes, **caractérisé en ce qu'**un second capteur d'accélération est fixé à la pièce (4) de manière à ce que l'axe de mesure du capteur soit orienté sensiblement à la parallèle du plan de rotation de la pièce (4) et orthogonalement à l'axe de mesure de capteur du premier capteur d'accélération (7), le signal de sortie du second capteur d'accélération étant mesuré et enregistré en plus du signal de sortie du premier capteur d'accélération (7), l'inclinaison étant déterminée de plus par exploitation de la seconde série de mesures ainsi obtenue.

11. Procédé selon une des revendications précédentes, **caractérisé en ce qu'**un autre capteur d'accélération est fixé à la pièce (4) de manière à ce que l'axe de mesure du capteur soit orienté sensiblement à la perpendiculaire du plan de rotation de la pièce (4), le signal de sortie de l'autre capteur d'accélération étant mesuré et enregistré en plus du signal de sortie du premier capteur d'accélération (7), l'inclinaison étant déterminée de plus par exploitation de l'autre série de mesures ainsi obtenue.

12. Procédé selon une des revendications précédentes, **caractérisé en ce que**, pour chaque signal de sortie, l'angle azimutal est déterminé et la série de mesures, la seconde série de mesures et/ou l'autre série de mesures sont complétées par enregistrement de l'angle azimutal associé à chaque signal de sortie pour former un graphe fonctionnel composé de paires ordonnées afin de déterminer le sens de l'inclinaison.

13. Dispositif de réalisation du procédé selon une des revendications 1 à 12, comprenant une unité d'exploitation ainsi que des moyens de lecture de signaux de sortie de capteurs d'accélération (7), l'unité d'exploitation étant conçue pour enregistrer le signal de sortie d'un capteur d'accélération (7) destiné à enregistrer une accélération statique en direction d'un axe de mesure du capteur et à déterminer l'inclinaison par exploitation de la série de mesures ainsi obtenue.

14. Dispositif selon la revendication 13, **caractérisé en ce que** l'unité d'exploitation est conçue pour effectuer les exploitations selon une des revendications 1 à 12 du brevet.

15. Dispositif selon la revendication 13 ou 14, **caractérisé en ce qu'**il englobe un capteur d'accélération (7).

Fig. 1

γ

β

γ=180°

α

Fig. 2

γ

γ=90°

α

Fig. 3

γ

γ=270°

α

Fig. 4

Fig. 5

EP 2 665 930 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2133563 A1